# EUROPÄISCHE PATENTSCHRIFT

(11) **EP 1 992 865 B1**
(45) Veröffentlichungstag und Bekanntmachung des Hinweises auf die Patenterteilung: **13.03.2019**
(21) Anmeldenummer: 08150159.5
(22) Anmeldetag: 10.01.2008
(51) Int. Cl.: F16T 1/20

(54) **Automatisches Kondensatablasssystem für pneumatische Systeme**
Automatic condensate release system for pneumatic systems
Système de décharge de condensat automatique pour systèmes pneumatiques

(30) Priorität: 18.01.2007 AT 922007
(43) Veröffentlichungstag der Anmeldung: 19.11.2008
(73) Patentinhaber: Parker Origa Holding AG, 6304 Zug (CH)
(72) Erfinder: Bauregger, Erich, 2640 Gloggnitz (AT)
(74) Vertreter: Feucker, Max Martin

(56) Entgegenhaltungen:
- DE-A1- 3 233 598
- DE-U1- 29 718 851
- GB-A- 412 448
- LU-A1- 82 619
- US-A- 3 993 090
- US-A- 5 636 655

## Beschreibung

Die Erfindung betrifft ein automatisches Kondensatablasssystem für pneumatische Systeme, mit einem Kondensatsammelvolumen und mit einem das Kondensatsammelvolumen mit der Umgebung verbindenden Hauptablassventil, welches Hauptablassventil eine Passage zur Verbindung eines Steuervolumens mit der Umgebung aufweist, wobei das Steuervolumen gegenüber dem pneumatischen System durch ein Vorsteuerventil abgegrenzt ist, dessen Ventilelement durch einen im Kondensatsammelvolumen befindlichen Auftriebskörper betätigbar ist, wobei das Ventilelement in der Schließstellung auf einem durch einen nach oben konisch zulaufenden Abschnitt an einer Oberseite des Steuervolumens gebildeten, gegenüber seiner unmittelbaren Umgebung erhöht ausgeführten Ventilsitz auflagert.

Derartige automatische Kondensatablasssysteme sind in verschiedenen Varianten bekannt, deren als im wesentlichen flache Ventilplatten ausgeführte Schließköper mittels Auftrieb vom Ventilsitz abgehoben und durch die auch die Öffnung des Ventils bewirkenden Kräfte gehalten werden müssen. Diese Bauweise führt insbesondere bei hohen Drücken im System zu Problemen.

Ein automatisches Kondensatablasssystem mit einem plattenartigen Ventilelement ist in der US 3,993,090 A beschrieben. Soweit ein durch einen Auftriebskörper betätigbares Ventilelement eine Verbindung zum Steuervolumen öffnet beziehungsweise schließt, lagert das plattenartige Ventilelement auf einem Ventilsitz auf, der seinerseits von einem nach oben konisch zulaufenden, gegenüber seiner unmittelbaren Umgebung erhöht ausgebildeten Abschnitt gebildet ist. Gleichzeitig ist das plattenartige Ventilelement im Inneren eines an dem Auftriebskörper ausgebildeten Käfigs angeordnet derart, dass das Ventilelement von dem Auftriebskörper jeweils zwangsgeführt in die Öffnungsposition beziehungsweise die Schließposition gebracht wird. Insoweit tritt der für Kondensatablasssysteme mit flachen Ventilplatten geschilderten Nachteil auch hier ein.

Weiters sind, beispielsweise aus der DE 40 71 82 A, der FR 60 47 47 A, der DE 54 69 44 A beziehungsweise der DE 13 18 22 A, Kondensatablasssysteme für die unmittelbare Entwässerung über Kugelventile bekannt. Hier betätigt ein Schwimmer einen kugelförmigen Ventilkörper, der vom Ventilsitz weggewälzt und dabei in eine Offenstellung angehoben wird, in welcher die Ventilkugel dann durch die Auftriebskräfte gehalten wird.

In der US 5,636,655 A ist ein Ventil mit einem im wesentlichen konischen, gegenüber seiner unmittelbaren Umgebung erhöhten Ventilsitz geoffenbart, welcher Ventilsitz aber keinen oberen Totpunkt für das Ventilelement darstellt, sondern vielmehr den unteren Totpunkt. Damit ist der energetisch niedrigste Zustand des Ventilelementes seine Schließstellung, aus welcher es mit konstant steigender oder zumindest konstanter Betätigungskraft in die ebenfalls durch Betätigungskraft zu haltende Offenstellung gehoben werden muss.

Auch die DE 32 33 598 A1 zeigt ein Ventil mit einem im Wesentlichen konischen, gegenüber seiner unmittelbaren Umgebung erhöhten Ventilsitz, der aber wieder keinen oberen Totpunkt für das Ventilelement darstellt. Auch hier ist der Ventilsitz die unterste Stellung des Ventilelementes und daher ist dessen Schließstellung auch zugleich sein energetisch niedrigster Zustand, aus welchem es durch den Schwimmer in die durch Betätigungskraft zu haltende Offenstellung gehoben werden muss.

Die Aufgabe der vorliegenden Erfindung war daher ein sicher und bei allen Drücken, insbesondere bei sehr hohen Drücken, funktionierendes vorgesteuertes Kondensatablasssystem.

Zur Lösung diese Aufgabe ist das eingangs beschriebene System erfindungsgemäß dadurch gekennzeichnet, dass das Ventilelement von einer Kugel gebildet ist, die in der Schließstellung auf dem einen energetisch höheren Zustand und einen oberen Totpunkt für die Kugel darstellenden Ventilsitz lagert und die bei Betätigung von dem Ventilsitz des Vorsteuerventils in eine einen energetisch niedrigeren Zustand als die Schließstellung mit einer stabilen Ruheposition aufweisende Offenstellung abrollt, und dass der Auftriebskörper mit einem Hebel zur Betätigung der Kugel des Vorsteuerventils verbunden ist, welcher Hebel um eine im Wesentlichen horizontale Achse schwenkbar ist, wobei der Auftriebskörper einen Rückschaltbügel für das Zurückschwenken des Hebels und damit der Kugel in deren Schließstellung mit steigender Rückstellkraft aufweist.

Vorteilhafterweise nimmt dabei die Betätigungskraft auf das Ventilelement von der Schließstellung in die Offenstellung stetig ab. Eine kleine Ausnahme kann natürlich ganz zu Beginn des Öffnungsvorganges vorliegen, um das erste Abheben von der quasistabilen Schließstellung zu erreichen. Ab diesem möglichen kurzen und nur geringfügigen ersten Anstieg der Betätigungskraft kann dann durch das stetige Abnehmen dieser Kraft das Erreichen einer stabilen Ruheposition für das Ventilelement bewirkt beziehungsweise zumindest unterstützt werden.

Soweit der Auftriebskörper mit einem Hebel zur Betätigung der Kugel verbunden ist, besteht eine vorteilhafte Variante darin, dass an der, der Verbindung mit dem Auftriebskörper gegenüberliegenden Seite der Achse des Hebels ein Gegengewicht vorgesehen ist.

Bei allen genannten Varianten des erfindungsgemäßen Systems kann vorteilhafterweise vorgesehen sein, dass der Auftriebskörper durch ein elastisches Element in Richtung der Auftriebskraft beaufschlagt ist.

In der nachfolgenden Beschreibung soll die Erfindung anhand der beigefügten Zeichnungen näher erläutert werden.

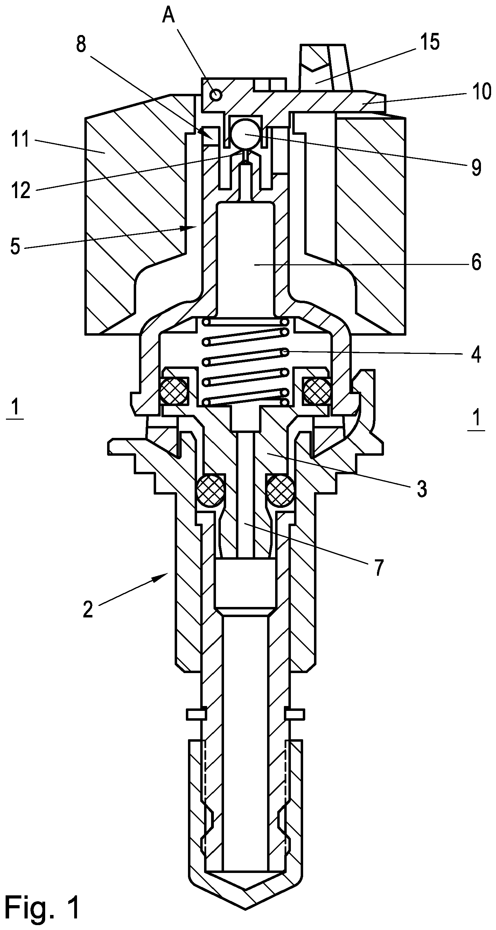

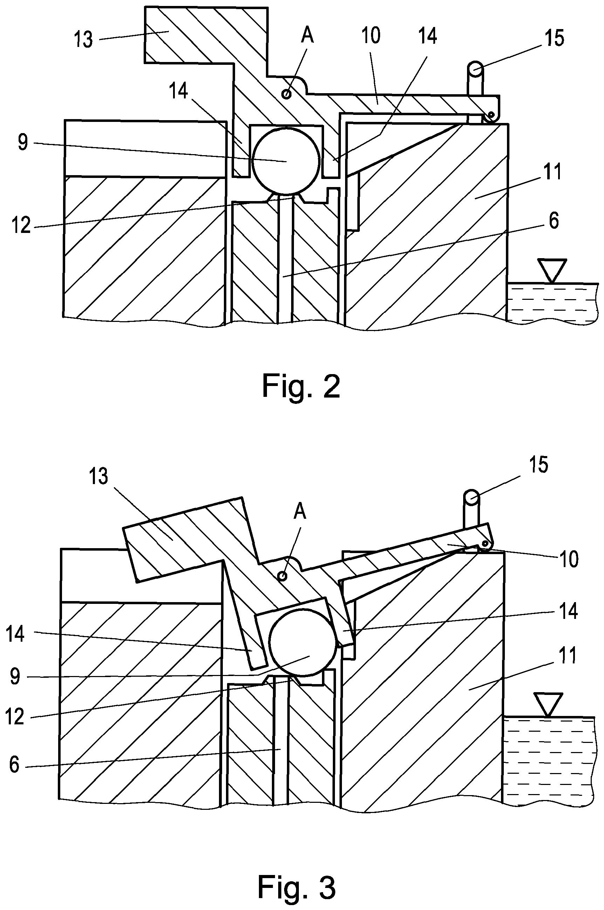

Dabei zeigt die Fig. 1 einen Längsschnitt durch ein erfindungsgemäßes Kondensatablasssystem, Fig. 2 zeigt in schematischer Darstellung, in Seitenansicht und im Schnitt, den erfindungsgemäßen Vorsteuermechanismus für ein Kondensatablasssystem in der Schließstellung und Fig. 3 zeigt den Mechanismus der Fig. 2 in Offenstellung.

An einem typischerweise unter gegenüber dem Atmosphärendruck erhöhten Druck arbeitenden pneumatischen System ist das in Fig. 1 ausschnittsweise dargestellte automatische Kondensatablasssystem vorgesehen, welches ein Kondensatsammelvolumen 1 aufweist Das sich darin mit der Zeit ansammelnde Kondensat kann über das Hauptablassventil 2 in die Umgebung abgegeben werden, wobei das Ventilelement 3 des Hauptablassventils 2 normalerweise durch den erhöhten Druck im System gegen die Wirkung des Federelementes 4 nach oben in die Schließstellung beaufschlagt wird.

Oberhalb des Hauptablassventils 2 ist ein Vorsteuerteil 5 vorgesehen. Von dessen Steuervolumen 6 ist eine Passage 7 durch das Ventilelement 3 des Hauptablassventils 2 zur Verbindung des Steuervolumens 6 ebenfalls mit der Umgebung vorhanden. Das normalerweise unter Atmosphärendruck stehende Steuervolumen 6 ist gegenüber dem erhöhten Druck des pneumatischen Systems durch ein Vorsteuerventil 8 abgegrenzt.

Das Vorsteuerventil 8 weist ein kugelförmiges Ventilelement 9 auf, welches unter Zwischenschaltung zumindest eines Hebels 10 durch einen im Kondensatsammelvolumen 1 befindlichen Auftriebskörper 11 betätigbar ist. Vorteilhafterweise ist dieser Auftriebskörper 11 zusätzlich zur Auftriebskraft durch ein elastisches Element in Richtung dieser Auftriebskraft beaufschlagt. Allenfalls könnte anstelle des kugelförmigen Ventilelementes 9 auch eine Ventilplatte vorgesehen sein, die über einen seitlich wegzudrückenden Hebel vom Ventilsitz abgehoben wird.

Durch die beispielhaft in Fig. 1 dargestellte Ausführung des Ventilsitzes 12 des Vorsteuerventils 8 in gegenüber seiner unmittelbaren Umgebung, d.h. im dargestellten Fall des nach oben konisch zulaufenden Abschnittes an der äußeren Oberseite der Begrenzung des Steuervolumens 6, ist eine stabile Ruheposition für das Ventilelement 9 des Vorsteuerventils 8 in seiner Offenstellung gegeben, in welcher es selbständig verbleibt, ohne durch äußere Einwirkungen gehalten werden zu müssen.

Überdies wird durch diese Konstruktion gleichzeitig erreicht, daß die zur Bewegung des Ventilelementes 9 notwendige Betätigungskraft stetig abnimmt, je mehr das Vorsteuerventil 8 geöffnet wird. Eine kleine Ausnahme davon stellt lediglich das erste Abheben des kugelförmigen Ventilelementes 9 vom Ventilsitz 12 dar, wenn dieses Ventilelement 9 über die Kante des Ventilsitzes 12 angehoben und über diese Kante zur Seite abrollen muß. Das Ausmaß des dafür nötigen geringfügigen Anstiegs der Betätigungskraft kann durch die geometrischen Verhältnisse wie Radius des Ventilelementes 9, Durchmesser des Ventilsitzes 12, usw. eingestellt werden. Für den weitaus größten Teil des Öffnungsweges des Vorsteuerventils 8 gilt aber, daß die Betätigungskraft auf das Ventilelement 9 von der Schließstellung in die Offenstellung stetig abnimmt, um somit zur Einstellung einer stabilen Ruhelage in der Offenstellung zumindest beizutragen.

Die Funktionsweise der erfindungsgemäßen Vorsteuerung ist in den Fig. 2 und 3 dargestellt. Über den Auftriebskörper 11 wird der Hebel 10 betätigt, wobei vorteilhafterweise das Verschwenken des Hebels 10 um seine vertikal über dem Ventilsitz 12 angeordnete Schwenkachse A durch ein Gegengewicht 13 auf dem Angriffspunkt des Auftriebskörpers 11 entgegengesetzten Seite unterstützt wird. Der Hebel 10 ist mit einem nach unten offenen, den Ventilkörper 9 umgreifenden Käfig oder ähnlichen Strukturen 14 versehen, welche bei Verschwenkung des Hebels 10 aus seiner in Fig. 2 dargestellten Ruheposition auch das Ventilelement 9 seitlich vom Ventilsitz 12 ab- und wegwälzt und somit die Passage 7 vom Vor-Steuervolumen 6 in die Umgebung hin öffnet. Für diesen Öffnungsvorgang ist nach dem ersten seitlichen Wegwälzen des Ventilelementes 9 in weiterer Folge eine stetig abnehmende Betätigungskraft erforderlich, so daß das Ventilelement 9 raschestmöglich in eine stabile Endlage in Offenstellung des Vorsteuerventils 8 gelangt.

Diese Offenstellung, in welcher das Ventilelement 9 selbst ohne weitere Einwirkung des Hebels 10 selbständig verbleibt, da es sich nunmehr in einem energetisch niedrigeren Zustand und damit einer stabilen Ruheposition befindet, ist in Fig. 3 dargestellt. Die Passage 7 bleibt nun solange geöffnet, bis durch Abfließen des Kondensates über das sich aufgrund der geschilderten Vorsteuerung öffnenden Hauptablassventils 2 der Flüssigkeitsstand und damit auch der Auftriebskörper 11 wieder absinkt. Dann wird der Hebel 10 durch einen Rückschaltbügel 15 am Auftriebskörper 11 wieder in seine Ausgangsstellung gebracht, wobei der Hebel 10 beim Zurückschwenken auch den Ventilköper 9 wieder, üblicherweise mit ansteigender Rückstellkraft, zurück auf den Ventilsitz 12 wälzt und derart die Passage 7 wieder verschließt.

## Patentansprüche

1. Automatisches Kondensatablasssystem für pneumatische Systeme, mit einem Kondensatsammelvolumen (1) und mit einem das Kondensatsammelvolumen (1) mit der Umgebung verbindenden Hauptablassventil (2), welches Hauptablassventil (2) eine Passage (7) zur Verbindung eines Steuervolumens (6) mit der Umgebung aufweist, wobei das Steuervolumen (6) gegenüber dem pneumatischen System durch ein Vorsteuerventil (8) abgegrenzt ist, dessen Ventilelement durch einen im Kondensatsammelvolumen (1) befindlichen Auftriebskörper (11) betätigbar ist, wobei das Ventilelement in der Schließstellung auf einem durch einen nach oben konisch zulaufenden Abschnitt an einer Oberseite des Steuervolumens (6) gebildeten gegenüber seiner unmittelbaren Umgebung erhöht ausgeführten Ventilsitz (12) auflagert, **dadurch gekennzeichnet, dass** das Ventilelement von einer Kugel (9) gebildet ist, die in der Schließstellung auf dem einen energetisch höheren Zustand und einen oberen Totpunkt für die Kugel (9) darstellenden Ventilsitz (12) lagert und die bei Betätigung von dem Ventilsitz (12) des Vorsteuerventils (8) in eine einen energetisch niedrigeren Zustand als die Schließstellung mit einer stabilen Ruheposition aufweisende Offenstellung abrollt, und dass der Auftriebskörper (11) mit einem Hebel (10) zur Betätigung der Kugel (9) des Vorsteuerventils (8) verbunden ist, welcher Hebel (10) um eine im Wesentlichen horizontale Achse (A) schwenkbar ist, wobei der Auftriebskörper (11) einen Rückschaltbügel (15) für das Zurückschwenken des Hebels (10) und damit der Kugel (9) in deren Schließstellung mit steigender Rückstellkraft aufweist.

2. Kondensatablasssystem nach Anspruch 1, **dadurch gekennzeichnet, dass** an der, der Verbindung mit dem Auftriebskörper (11) gegenüberliegenden Seite der Achse (A) des Hebels (10) ein Gegengewicht vorgesehen ist.

3. Kondensatablasssystem nach einem der Ansprüche 1 oder 2, **dadurch gekennzeichnet, dass** der Auftriebskörper (11) durch ein elastisches Element in Richtung der Auftriebskraft beaufschlagt ist.

## Claims

1. An automatic condensate drainage system for pneumatic systems, comprising a condensate collecting volume (1), comprising a main drain valve (2) which connects the condensate collecting volume (1) to the surroundings, which main drain valve (2) has a passage (7) for connecting a control volume (6) to the surroundings, wherein the control volume (6) is delimited by a pre-control valve (8) with respect to the pneumatic system, whose valve element can be actuated by a buoyancy member (11) located in the condensate collecting volume (1), wherein in its closed position, the valve element is supported on a valve seat (12) which is designed as elevated compared with its immediate surroundings by an upwardly conically tapering section on an upper side of the control volume (6), **characterized in that** the valve element is formed by a ball (9), which in the closed position is supported on the valve seat (12) forming an energetically higher sate and an upper dead-centre for the ball (9) and which ball (9) upon actuating unrolls from the valve seat (12) of the pre-control valve (8) into an open position comprising an energetically lower state compared to the open position with a stable rest position, and **in that** the buoyancy member (11) is connected to a lever (10) for actuating the ball (9) of the pre-control valve (8), which lever (10) is pivotable about a substantially horizontal axis (A), wherein the buoyancy member (11) comprises a back-switch clip (15) for back pivoting of the lever (10) and thereby the ball into their closed position with an increasing restoring force.

2. The condensate drainage system according to claim 1, **characterised in that** a counterweight is provided on the side of the axis (A) of the lever (10) opposite to the connection to the buoyancy member (11).

3. The condensate drainage system according to any one of claims 1 or 2, **characterised in that** the buoyancy member (11) is acted upon by an elastic member in the direction of the buoyancy force.

## Revendications

1. Système automatique d'évacuation de condensat pour systèmes pneumatiques, comportant un volume de collecte de condensat (1) et une vanne d'évacuation principale (2) reliant le volume de collecte de condensat (1) à l'environnement, laquelle vanne d'évacuation principale (2) présente un passage (7) pour la connexion d'un volume de commande (6) à l'environnement, le volume de commande (6) étant délimité par rapport au système pneumatique par une vanne pilote (8) dont l'élément vanne est actionnable par un corps de sustentation (11) se trouvant dans le volume de collecte de condensat (1), l'élément vanne reposant, en position de fermeture, sur une section orientée en forme de cône vers le haut au niveau d'un siège de vannes (12) de conformation surélevée par rapport à son environnement immédiat et constitué au niveau d'une face supérieure du volume de commande (6), **caractérisé en ce que** l'élément vanne est constitué par une bille (9) qui, en position de fermeture, s'appuie sur le siège de vanne (12) constituant un état supérieur du point de vue énergétique et un point mort supérieur pour la bille (9) et, en cas d'actionnement par le siège de vanne (12) de la vanne pilote (8), roule dans un état inférieur à la position de fermeture avec une position d'ouverture présentant une position de repos stable, et que le corps de sustentation (11) est connecté à un levier (10) pour actionner la bille (9) de la vanne pilote (8), lequel levier (10) est pivotable autour d'un axe (A) sensiblement horizontal, le corps de sustentation (11) présentant un étrier de rétrogradation (15) pour faire pivoter le levier (10) et ainsi la bille (9) dans sa position de fermeture lorsque la force de réinitialisation augmente.

2. Système d'évacuation de condensat selon la revendication 1, **caractérisé en ce que**, au niveau de la face opposée à la connexion avec le corps de sustentation (11) de l'axe (A) du levier (10), un contrepoids est prévu.

3. Système d'évacuation de condensat selon une des revendications 1 ou 2, **caractérisé en ce que** le corps de sustentation (11) est sollicité par un élément élastique en direction de la force de sustentation.
